Europäisches Patentamt

European Patent Office

Office européen des brevets

(11) Veröffentlichungsnummer: **0 307 588 B1**

# (12) EUROPÄISCHE PATENTSCHRIFT

(45) Veröffentlichungstag der Patentschrift: **25.11.92**

(51) Int. Cl.5: **B60T 8/78**, B60T 8/84

(21) Anmeldenummer: **88112003.4**

(22) Anmeldetag: **26.07.88**

(54) **Antiblockiersystem für Fahrzeuge.**

(30) Priorität: **07.10.87 DE 3733801**
**21.09.87 DE 3731685**

(43) Veröffentlichungstag der Anmeldung:
**22.03.89 Patentblatt 89/12**

(45) Bekanntmachung des Hinweises auf die
Patenterteilung:
**25.11.92 Patentblatt 92/48**

(84) Benannte Vertragsstaaten:
**DE FR GB IT SE**

(56) Entgegenhaltungen:
**EP-A- 0 088 894**
**DE-A- 2 830 580**
**FR-A- 2 442 165**

(73) Patentinhaber: **WABCO Westinghouse Fahr-**
**zeugbremsen GmbH**
**Am Lindener Hafen 21 Postfach 91 12 80**
**W-3000 Hannover 91(DE)**

(72) Erfinder: **Holst, Hans, Dipl.-Ing.**
**Bethlehemplatz 3**
**W-3000 Hannover 91(DE)**
Erfinder: **Kaess, Hans-Harald, Dipl.-Ing.**
**Schlesierdamm 12 a**
**W-3004 Isernhagen NB(DE)**
Erfinder: **Lindemann, Klaus**
**Lindener Weg 40 B**
**W-3000 Hannover 91(DE)**
Erfinder: **Petersen, Erwin, Dr.-Ing.**
**Fliederweg 22**
**W-3050 Wunstorf 1(DE)**
Erfinder: **Saba, Manfred**
**Nenndorfer Landstrasse 117 a**
**W-3003 Ronnenberg 3(DE)**

(74) Vertreter: **Schrödter, Manfred**
**WABCO Westinghouse Fahrzeugbremsen**
**GmbH Am Lindener Hafen 21 Postfach 91 12**
**80**
**W-3000 Hannover 91(DE)**

**Beschreibung**

Die Erfindung bezieht sich auf ein Antiblockiersystem für Fahrzeuge gemäß dem Oberbegriff des Patentanspruchs 1.

Bei im Serieneinsatz befindlichen Antiblockiersystemen sind verschiedene Regelkonzepte bekannt.

Die Einzelrad- oder Individual-Regelung (IR) sieht je Rad einen separaten Regelkreis mit eigenem Sensor und Stellglied (Magnetventil) vor und ermöglicht damit optimale Regelungen bei allerdings höchstem Bauaufwand.

Die Modifizierte Individual-Regelung (MIR) (DE-A 28 51 107) wurde aus der Individualregelung entwickelt, um den Lenkaufwand auf Fahrbahnen mit seitenweise unterschiedlichen oder wechselnden Kraftschlußbedingungen durch Reduzierung der Giermomente für Normalfahrer beherrschbar zu machen. Sie sieht für das sogenannte High-Rad, das auf der guten Straßenseite läuft, z. B. eine Druckhaltephase vor, wenn das auf der schlechten Straßenseite laufende Low-Rad eine Druckabsenkung infolge eines Verzögerungs- und/oder Schlupfsignals erfährt.

Neben den Individual-Regelungen sind sowohl für druckluftgebremste Fahrzeuge als auch für hydraulisch gebremste Fahrzeuge Achs- oder Radgruppen-Regelungen bekannt. Diese verwenden zwar je einen Sensor pro Rad aber aus Kostengründen nur ein gemeinsames Stellglied für die beiden Räder einer Achse. Deren Bremszylinder sind also parallel geschaltet.

Bei der vielfach verwendeten sogenannten Select-Low-Regelung (SLR) wird der gemeinsame Bremsdruck beider Räder gesenkt und nachfolgend weiter geregelt in Abhängigkeit vom Bewegungsverhalten des Rades mit dem niedrigeren Kraftschluß (Low-Rad). Eine Drucksenkung erfolgt bei den bekannten Einrichtungen, sobald vom Low-Rad ein Verzögerungs- (-b) und/oder ein Schlupfsignal (λ) erzeugt wird. Select-Low-Regelungen führen deshalb zwar zu einem hohen Seitenführungskraftüberschuß, aber auch zu einer teilweise erheblichen Unterbremsung des auf der guten Straßenseite laufenden High-Rades. Daher werden nicht nur auf sogenannten µ-split Fahrbahnen, sondern auch auf Fahrbahnen mit wechselnden Reibwerten (Eiszungen u. a.) oder unebenen Oberflächen (Kopfsteinpflaster, Schlechtweg) sowie auch bei Kennwertunterschieden in den Radbremsen teilweise erhebliche Bremswegverlängerungen, verglichen mit der Individual-Regelung (IR) oder auch mit einer Bremsung mit blockierten Rädern, verursacht.

Es wird deshalb in einigen Fällen auch die sogenannte Select-High-Regelung (SHR) verwendet, die das Bewegungsverhalten des Low-Rades unberücksichtigt läßt und erst auf Verzögerungs- und/oder Schlupfsignale des High-Rades reagiert. Dabei wird bewußt ein (auch längerdauerndes) Blockieren des Low-Rades in Kauf genommen. Die Select-High-Regelung kann aber beim Bremsen in der Kurve auf griffigen Fahrbahnen zu unerwünschten Reifenflachstellen am Low-Rad und zu Stabilitätseinbußen des Fahrzeugs führen.

Soweit derartige Select-Low- oder Select-High-Regelungen in Nutzfahrzeugen eingesetzt werden, erfolgt die Druckregelung meist über 3/2-Wege-Magnetventile, die nur Be- und Entlüftungs-, jedoch keine Druckhaltephasen ermöglichen.

Der Erfindung liegt die Aufgabe zugrunde, ein Antiblockiersystem mit paarweiser Regelung der Bremszylinder anzugeben, bei dem die Bremswirkung gegenüber dem Select-Low-Konzept verbessert ist. Das beim Select-High-Konzept auftretende Radblockieren soll andererseits weitgehend vermieden werden.

Diese Aufgabe wird durch die im Patentanspruch 1 angegebene Erfindung gelöst. Die Unteransprüche enthalten Weiterbildungen der Erfindung.

Das erfindungsgemäße Regel-Konzept wurde bereits für ein neues Anhänger-Antiblockiersystem erprobt. Die obengenannten Verbesserungen gegenüber SLR und SHR wurden in Theorie und Versuch nachgewiesen.

Das Grundkonzept besteht darin, entgegen bekannter und üblicher Gepflogenheit bei Individual- oder Select-Low-Regelungen (DE-A 27 40 419) auf das Verzögerungs- (-b) und ggf. sogar auf das Schlupfsignal (λ) des Low-Rades nicht gleich mit einer Bremsdruckabsenkung, sondern nur mit einem Konstanthalten des Bremsdruckes zu reagieren.

Das erfindungsgemäße Antiblockiersystem wird im folgenden anhand einer Zeichnung näher erläutert.

Die Zeichnung zeigt in vereinfachter, schematischer Darstellung in

Fig. 1 ein Blockschaltbild eines Antiblockiersystems mit achsweiser Regelung

Fig. 2 ein Blockschaltbild mit seitenweiser Regelung

Fig. 3 ein Diagramm mit einem Druckverlauf, wie er mit der erfindungsgemäßen Anordnung erzielt wird.

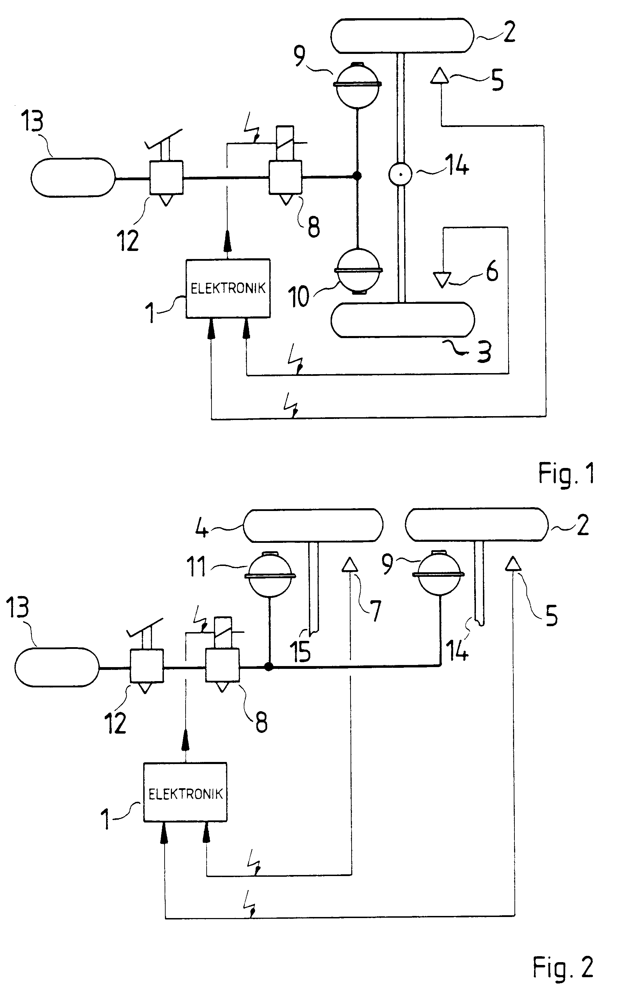

In der Fig. 1 ist mit (14) eine Achse eines Kraftfahrzeugs oder eine Achse eines Anhängers bezeichnet. Die beiden Räder (2, 3) dieser Achse weisen je einen eigenen Drehzahlsensor (5, 6) auf. Diese Sensoren tasten das Drehverhalten der Räder ab. Die Signale der Sensoren (5, 6) werden einer Elektronik (1) zugeleitet.

Den beiden Rädern (2, 3) sind Bremszylinder (9, 10) zugeordnet, die gemeinsam über ein Regelventil (8) (Magnetventil) belüftet oder entlüftet werden können. Das Regelventil (8) ist als Dreistellungsventil ausgebildet, so daß auch die Stellung "Druck halten" eingestellt werden kann. Die Betätigungsspule des Regelventils (8) wird von einem Ausgang der Elektronik (1) angesteuert.

Die in der Fig. 1 dargestellte Druckluftbremsanlage wird durch einen Druckluftvorrat (13) versorgt. Über ein Trittplatten-Bremsventil (12) kann der Fahrer den gewünschten Bremsdruck einstellen.

Die in Fig. 1 dargestellte Bremsanlage entspricht in ihrem Aufbau einer bekannten Select-Low- oder - je nach Regelverhalten - Select-High-Anlage.

Die in der Fig. 2 dargestellte Bremsanlage entspricht im wesentlichen der der Fig. 1. Es erfolgt hier jedoch keine achsweise, sondern eine seitenweise Regelung der Räder (2) und (4). Dabei ist auch das Rad (4) der zweiten Hinterachse (15) mit einem Sensor (7) und einem Bremszylinder (11) versehen. Die beiden Bremszylinder (9) und (11) der Räder (2) und (4) sind wiederum parallel geschaltet. Im übrigen entspricht das Schaltbild der Fig. 2 dem der Fig. 1.

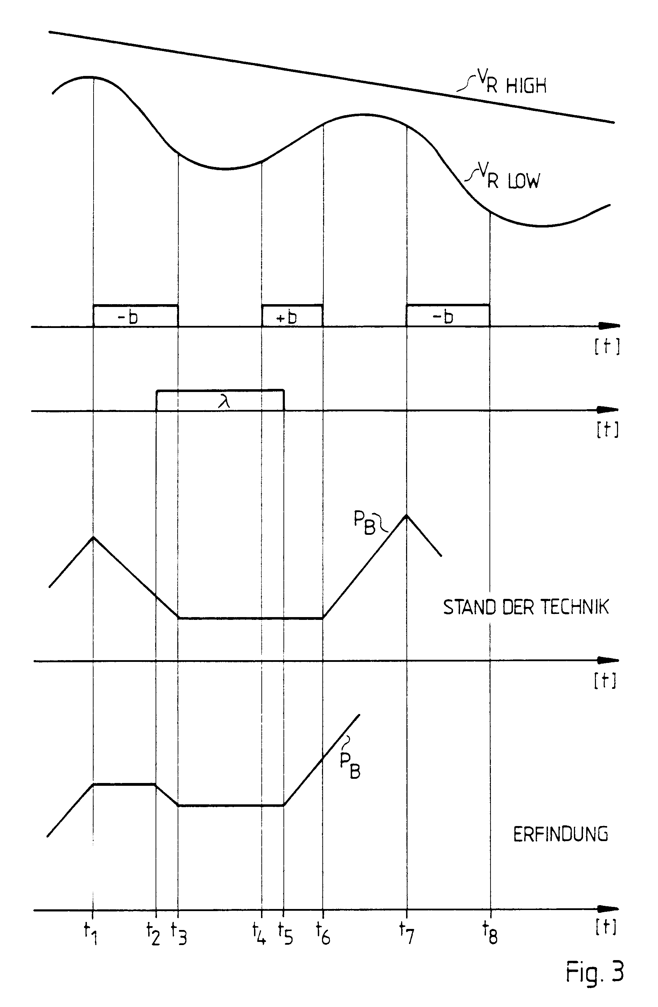

In der Fig. 3 ist ein Diagramm dargestellt, in dem die Radgeschwindigkeiten, die Beschleunigungs-, Verzögerungs- und Schlupfsignale, die in der Elektronik (1) erzeugt werden, ein Bremsdruckverlauf nach dem Stand der Technik und ein Bremsdruckverlauf nach der Erfindung über der Zeit enthalten sind.

Anhand des Diagramms der Fig. 3 wird im folgenden die Funktionsweise des erfindungsgemäßen Antiblockiersystems für Fahrzeuge näher erläutert.

Es sei angenommen, daß sich das Fahrzeug in einem geregelten Bremszustand befindet. Dabei ergibt sich für das auf der schlechten Straßenseite laufende Low-Rad der typische wellenförmige Geschwindigkeitsverlauf $v_{RLow}$. Dagegen läuft das auf der guten Straßenseite befindliche High-Rad noch ungeregelt, d. h. seine Geschwindigkeit $v_{RHigh}$ entspricht im wesentlichen der Fahrzeuggeschwindigkeit.

Infolge der Geschwindigkeitsänderungen des Low-Rades werden in an sich bekannter Weise innerhalb der Elektronik (1) Regelsignale für die Verzögerung (-b), die Beschleunigung (+b) und den Schlupf (λ) des geregelten Rades erzeugt. Das Schlupfsignal (λ) bedeutet dabei, daß die Geschwindigkeit des überwachten Rades um einen bestimmten Prozentsatz unter die Fahrzeug-Referenzgeschwindigkeit gefallen ist.

Der bekannte und übliche Druckverlauf eines Regelzyklus nach dem Stand der Technik (Bremsdruck $P_B$) beginnt zum Zeitpunkt $t_1$ mit einer Druckabsenkung für die Dauer des Auftretens des (-b)-Signals. Der Druck wird anschließend gehalten für die Dauer des (λ)-Signals und bis zum Ende des (+b)-Signals. Anschließend erfolgt eine - gegebenenfalls gepulste-Druckwiedereinsteuerung bis zum erneuten Auftreten eines (-b)-Signals.

Gemäß der Erfindung erfolgt nun im Zeitpunkt $t_1$ mit dem Auftreten des (-b)-Signals keine Druckabsenkung, sondern lediglich ein Druckhalten. Eine Druckabsenkung im Zeitpunkt $t_2$ erfolgt erst dann, wenn das (λ)-Signal auftritt.

Alternativ erfolgt eine Bremsdruckabsenkung auch dann, wenn auch das zweite Rad (High-Rad) ein Verzögerungs- (-b) und/oder Schlupfsignal (λ) erzeugt (nicht dargestellt).

Ist eine derartige Bremsdruckabsenkung erfolgt, die bis zum Wiederabfall des Verzögerungssignals (-b) dauert (Zeitpunkt $t_3$) und gegebenenfalls auch in gepulster Form ausgeführt sein kann, wird - nach einer Haltephase auf niedrigem Druckniveau - der Bremsdruck relativ früh, nämlich schon nach Abfall des Schlupfsignals (λ), wieder aufgepulst bzw. gesteigert (Zeitpunkt $t_5$), sofern das High-Rad die eigene Schlupfschwelle (λ) nicht oder nur sehr kurz überschritten hat. Andernfalls wird der Bremsdruck in bekannter Weise erst nach Wiederbeschleunigen (+b-Abfall) beider Räder erhöht.

Wesentlich ist, daß durch das erfindungsgemäße Regelungskonzept auf Fahrbahnen mit stark unterschiedlichen Kraftschlußverhältnissen links/rechts (μ-Split) oder auch mit stellenweise sehr niedrigem Kraftschluß (Eiszungen, Sand- oder Schneeflecken) bewußt ein hoher Schlupf am Low-Rad zugelassen wird zugunsten der Erhaltung einer relativ hohen Bremskraft für das High-Rad. Dies gilt sowohl für die achsweise Regelung nach Fig. 1 als auch für die seitenweise Regelung nach Fig. 2.

Wie aus der Fig. 3 ersichtlich ist, liegt das Bremsdruckniveau bei der Erfindung zeitweise erheblich höher als beim Stand der Technik. Es wird mit der Erfindung bewußt der Grundsatz der bisherigen Antiblockiersysteme verlassen, das geregelte Rad nicht über einen maximalen (und an sich optimalen) Schlupf von etwa 20 % kommen zu lassen.

Solange das High-Rad selbst keine Regelsignale erzeugt und Druckabsenkung fordert, bremst dieses mit wegen der Druckhaltephase von $t_1$ bis $t_2$ noch hohem Überschuß an Seitenführungskraft.

Dadurch kann auf die bei schlechter Straßenoberfläche mit niedrigem Kraftschluß ohnehin eingeschränkte Seitenführung des Low-Rades weitgehend verzichtet werden. Ein längerdauerndes Blockieren des Low-Rades, wie sie bei der Select-High-Regelung auftritt, wird jedoch vermieden. Für die Bremskraft des Low-Rades ist es - wegen der entsprechenden μ-λ-Charakteristikvon Fahrbahnen mit geringem Kraftschluß (Schnee, Eis, Sand) - von relativ geringem Einfluß, ob das Low-Rad mit geringem oder hohem Schlupf bremst. Wichtiger ist es, unnötige Bremskraftreduzierungen (z. B. infolge von Eiszungen oder Radschwingungen) an dem stabil gebremsten High-Rad zu vermeiden.

Das erfindungsgemäße Regelungskonzept sorgt auch für eine μ-Split-Erkennung. Wenn nämlich auch das High-Rad Regelsignale erzeugt, insbesondere wenn für beide Räder ein länger als beispielsweise 100 ms dauerndes Schlupfsignal (λ) ansteht, wird auf eine Regelung ähnlich Select-Low-Regelung umgeschaltet. Dadurch wird auf Fahrbahnen mit mit etwa gleichmäßig niedrigem Kraftschluß das Seitenführungsvermögen an beiden Rädern der Achse ausgenutzt. Andererseits wird auf Fahrbahnen mit hohem Kraftschluß ein zu höherem Reifenverschleiß führender starker Schlupf an beiden Rädern vermieden.

Besonders in Verbindung mit relativ langsam reagierenden Regelventilen (8) kann es vorteilhaft sein, für den ersten Regelzyklus das Bewegungsverhalten des Low-Rades zugrundezulegen und erst bei den nachfolgenden Regelspielen das oben beschriebene erfindungsgemäße Konzept anzuwenden.

Auch kann es vorteilhaft sein, bei niedrigen Fahrzeuggeschwindigkeiten, d. h. zum Beispiel für $v_F < 15$ km/h, nach Select-Low-Kriterien zu verfahren, um die untere Regelgrenze zu senken oder auch den dann ohnehin höheren Schlupf zu reduzieren.

## Patentansprüche

1. Antiblockiersystem für Fahrzeuge, mit einer Elektronik (1), die in Abhängigkeit von der Raddrehzahl interne Signale für den Radschlupf (λ), die Radbeschleunigung (+b) und/oder die Radverzögerung (-b) bildet und den Bremsdruck ($P_B$) in Abhängigkeit von den genannten Signalen senkt, konstant hält oder steigert und wobei die beiden Räder einer Achse (2, 3) oder einer Fahrzeugseite (2, 4) mit je einem Drehzahlsensor (5, 6; 5, 7) und mit einem gemeinsamen Regelventil (8) für den Bremsdruck in den Bremszylindern (9, 10; 9, 11) versehen sind, gekennzeichnet durch die folgenden Merkmale:

   a) Die Elektronik (1) schaltet mit dem Auftreten eines vom Low-Rad verursachten Verzögerungssignals (-b) das Regelventil (8) auf "Druck halten";
   b) die Elektronik (1) schaltet mit dem Auftreten eines vom Low-Rad verursachten Schlupfsignals (λ) das Regelventil (8) auf "Druck senken";
   c) die Elektronik (1) schaltet bei Abfall des vom Low-Rad verursachten Verzögerungssignals (-b) das Regelventil (8) auf "Druck halten";

   d) die Elektronik (1) schaltet mit dem Abfallen des Schlupfsignals (λ) das Regelventil (8) auf "Druck steigern".

2. Antiblockiersystem nach Anspruch 1, dadurch gekennzeichnet, daß die Elektronik (1) mit dem Auftreten eines vom High-Rad verursachten Verzögerungssignals (-b) und/oder Schlupfsignals (λ) das Regelventil (8) auf "Druck senken" schaltet.

3. Antiblockiersystem nach Anspruch 1 bis 2, dadurch gekennzeichnet, daß die Elektronik (1) mit dem Auftreten eines vom High-Rad verursachten Schlupfsignals (λ) auf eine Select-Low-Regelung umschaltet.

4. Antiblockiersystem nach Anspruch 3, dadurch gekennzeichnet, daß die Elektronik (1) die Umschaltung auf Select-Low-Regelung dann vornimmt, wenn von beiden Rädern (High- und Low-Rad) ein länger als etwa 100 ms dauerndes Schlupfsignal (λ) verursacht wird.

5. Antiblockiersystem nach Anspruch 1 bis 4, dadurch gekennzeichnet, daß die Elektronik (1) während des ersten Regelzyklus auf Select-Low-Regelung umschaltet.

6. Antiblockiersystem nach Anspruch 1 bis 5, dadurch gekennzeichnet, daß die Elektronik (1) bei niedriger Fahrzeuggeschwindigkeit ($v_F < 15$ km/h) auf Select-Low-Regelung umschaltet.

## Claims

1. An anti-lock system for vehicles, having an electronics assembly (1), which forms internal signals for the wheel slip (λ), the wheel acceleration (b) and/or the wheel deceleration (-b) in dependence on the wheel speed and lowers, maintains or increases the brake pressure ($P_B$) in dependence on the said signals, in which system the two wheels of an axle (2, 3) or on a vehicle side (2, 4) are provided with their own speed sensors (5, 6; 5, 7) and with a common control valve (8) for the brake pressure in the brake cylinders (9, 10; 9, 11), characterized by the following features:

   a) the electronics assembly (1) switches the control valve (8) to "maintain pressure" on the appearance of a deceleration signal (-b) caused by the "low" wheel;
   b) the electronics assembly (1) switches the control valve (8) to "reduce pressure" on the appearance of a slip signal (λ) caused by the "low" wheel;
   c) the electronics assembly (1) switches the control valve (8) to "maintain pressure" when the deceleration signal caused by the "low" wheel fades;

d) the electronics assembly (1) switches the control valve (8) to "increase pressure" when the slip signal (λ) fades.

2. An anti-lock system according to claim 1, characterized in that the electronics assembly (1) switches the control valve (8) to "reduce pressure" on the appearance of a deceleration signal (-b) and/or a slip signal (λ) caused by the "high" wheel.

3. An anti-lock system according to claims 1 to 2, characterized in that the electronics assembly (1) switches over to a select-low control on the appearance of a slip signal (λ) caused by the "high" wheel.

4. An anti-lock system according to claim 3, characterized in that the electronics assembly (1) performs the switch to select-low control when a slip signal (λ) lasting longer than about 100 ms is caused by both wheels ("high" and "low" wheel).

5. An anti-lock system according to claims 1 to 4, characterized in that the electronics assembly (1) switches over to select-low control during the first control cycle.

6. An anti-lock system according to claims 1 to 5, characterized in that the electronics assembly (1) switches over to select-low control at low vehicle speed ($v_F < 15$ km/h).

**Revendications**

1. Système antiblocage pour véhicules, comprenant une électronique (1) qui forme, en fonction de la vitesse de rotation d'une roue, des signaux internes pour le glissement (λ), l'accélération (+b) et/ou la décélération (-b) de la roue et, en fonction de ces signaux, réduit, maintient constante ou monte la pression de freinage ($P_B$), système dans lequel les deux roues d'un essieu (2, 3) ou d'un côté du véhicule (2, 4) sont pourvues chacune d'un capteur de vitesse de rotation (5, 6; 5, 7) et collectivement d'un vanne de réglage (8) commune pour la pression de freinage dans les cylindres de frein (9, 10; 9, 11), caractérisé en ce que :

a) l'électronique (1) commute la vanne de réglage (8) à "maintien de la pression" à l'apparition d'un signal de décélération (-b) provoqué par la roue à faible adhérence;

b) l'électronique (1) commute la vanne de réglage (8) à "réduction de la pression" à l'apparition d'un signal de glissement (λ) provoqué par la roue à faible adhérence;

c) l'électronique (1) commute la vanne de réglage (8) à "maintien de la pression" à la disparition du signal de décélération (-b) provoqué par la roue à faible adhérence; et

d) l'électronique (1) commute la vanne de réglage (8) à "montée en pression" à la disparition du signal de glissement (λ).

2. Système antiblocage selon la revendication 1, caractérisé en ce que l'électronique (1) commute la vanne de réglage (8) à "réduction de la pression" à l'apparition d'un signal de décélération (-b) et/ou d'un signal de glissement (λ) provoqué(s) par la roue à forte adhérence.

3. Système antiblocage selon la revendication 1 ou 2, caractérisé en ce que l'électronique (1) commute sur une régulation à sélection basse à l'apparition d'un signal de glissement (λ) provoqué par la roue à forte adhérence.

4. Système antiblocage selon la revendication 3, caractérisé en ce que l'électronique (1) effectue la commutation sur la régulation à sélection basse lorsque les deux roues (la roue à forte adhérence et la roue à faible adhérence) provoquent un signal de glissement (λ) se poursuivant pendant une durée supérieure à environ 100 ms.

5. Système antiblocage selon les revendications 1 à 4, caractérisé en ce que l'électronique (1) commute sur la régulation à sélection basse pendant le premier cycle de réglage.

6. Système antiblocage selon les revendications 1 à 5, caractérise en ce que l'électronique (1) commute sur une régulation à sélection basse à faible vitesse du véhicule (inférieure à 15 km/h).

Fig. 1

Fig. 2

$V_R$ HIGH

$V_R$ LOW

−b

+b

−b

[t]

λ

[t]

$P_B$

STAND DER TECHNIK

[t]

$P_B$

ERFINDUNG

$t_1$ $t_2$ $t_3$ $t_4$ $t_5$ $t_6$ $t_7$ $t_8$ [t]

Fig. 3